# EUROPEAN PATENT APPLICATION

(11) **EP 3 536 649 A2**
(43) Date of publication of application: **11.09.2019**
(21) Application number: 19154345.3
(22) Date of filing: 29.01.2019
(51) Int. Cl.: B66B 5/06, B66B 1/34

(54) **MAGNETIC SPEED DETECTION DEVICE**

(30) Priority: 31.01.2018 US 201815884853
(71) Applicant: Otis Elevator Company, Farmington, Connecticut 06032 (US)
(72) Inventor: BILLARD, Justin, Farmington, CT Connecticut 06032 (US); KHZOUZ, Erik, Farmington, CT Connecticut 06032 (US); MARVIN, Daryl J., Farmington, CT Connecticut 06032 (US)
(74) Representative: Dehns

(57) **Abstract**

A speed detection device (50) for an elevator system. The device includes a tire (52) operatively coupled to an elevator car, the tire having an outer diameter surface engageable with a guide rail (20) formed of metal. The device also includes a magnet (58) disposed within the tire (52), the magnet (58) providing a magnetic attractive force with the guide rail (20) to maintain contact between the tire (52) and the guide rail (20).

## Description

### BACKGROUND

The disclosure relates generally to elevator systems and, more particularly, to a magnetic speed detection device which may be used in elevator systems.

Some machines, such as an elevator system, include a safety system to stop the machine, such as an elevator cab, when it travels at excessive speeds. Conventional safety systems include one or more braking surfaces for slowing the over-speed condition. Monitoring the speed of the elevator cab for an over-speed condition requires one or more speed sensing systems. One speed sensing technology uses a roller that tracks on a guide rail surface. However, slippage between the roller surface and the guide rail may undesirably lead to inaccurate speed readings. Maintaining contact in a suitable manner requires the inclusion of a spring assembly.

### BRIEF SUMMARY

Disclosed is a speed detection device for an elevator system. The device includes a tire operatively coupled to an elevator car, the tire having an outer diameter surface engageable with a guide rail formed of metal. The device also includes a magnet disposed within the tire, the magnet providing a magnetic attractive force with the guide rail to maintain contact between the tire and the guide rail.

In addition to one or more of the features described above, or as an alternative, further embodiments may include a first side plate disposed on a first axial side of the magnet. Also included may be a second side plate disposed on a second axial side of the magnet.

In addition to one or more of the features described above, or as an alternative, further embodiments may include that the first and second side plates are each formed of steel.

In addition to one or more of the features described above, or as an alternative, further embodiments may include that the magnet is a ring magnet.

In addition to one or more of the features described above, or as an alternative, further embodiments may include that the magnet is axially magnetized to direct magnetic flux to one of the first and second side plates.

In addition to one or more of the features described above, or as an alternative, further embodiments may include that the magnet is at least one arc magnet.

In addition to one or more of the features described above, or as an alternative, further embodiments may include that the magnet is radially magnetized.

In addition to one or more of the features described above, or as an alternative, further embodiments may include a plurality of speed detection features to determine a rotational velocity of the tire.

In addition to one or more of the features described above, or as an alternative, further embodiments may include that the speed detection features comprise magnet portions protruding into apertures defined by at least one of the first and second side plates.

In addition to one or more of the features described above, or as an alternative, further embodiments may include that the speed detection features comprise apertures defined by at least one of the first and second side plates.

In addition to one or more of the features described above, or as an alternative, further embodiments may include that the tire comprises rubber.

In addition to one or more of the features described above, or as an alternative, further embodiments may include that the tire includes an inner diameter surface, a magnet outer diameter located proximate the inner diameter surface.

Also disclosed is a speed detection device for an elevator system. The device includes a housing operatively coupled to an elevator car. The device also includes at least one roller operatively coupled to the housing and engageable with a guide rail formed of metal. The device further includes a magnet providing a magnetic attractive force with the guide rail to maintain contact between the roller(s) and the guide rail.

In addition to one or more of the features described above, or as an alternative, further embodiments may include that the magnet is operatively coupled to the housing.

In addition to one or more of the features described above, or as an alternative, further embodiments may include that the magnet is one of a plurality of magnets, at least one magnet of the plurality of magnets disposed within each of the roller(s).

In addition to one or more of the features described above, or as an alternative, further embodiments may include that each of the roller(s) include a plurality of magnets disposed therein.

Further disclosed is a speed detection device that includes a roller in contact with a metallic member. The device also includes a speed sensing element detecting a rotational velocity of the roller during movement along the metallic member. The device further includes a magnet providing a magnetic attractive force with the metallic member to maintain contact between the roller and the metallic member.

### BRIEF DESCRIPTION OF THE DRAWINGS

The present disclosure is illustrated by way of example and not limited in the accompanying figures in which like reference numerals indicate similar elements.
FIG. 1 is a perspective view of an elevator system;
FIG. 2 is a perspective view of a speed detection device for the elevator system, the speed detection roller engaged with a guide rail of the elevator system;
FIG. 3 is a perspective view of a portion of the speed detection device;
FIG. 4 is a sectional view of a portion of the speed detection device, illustrating internal components of the speed detection device;
FIG. 5 is an elevational view of the speed detection device, illustrating a contour plot of magnetic flux density therein;
FIG. 6 is an elevational view of the speed detection device according to another aspect of the disclosure; and
FIG. 7 is an elevational view of the speed detection device according to another aspect of the disclosure.

### DETAILED DESCRIPTION

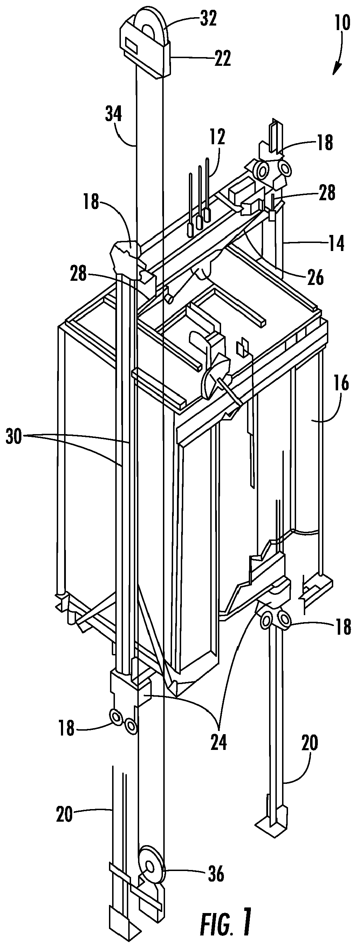

FIG. 1 shows an elevator system, generally referenced with numeral 10. The elevator system 10 includes cables 12, a car frame 14, an elevator cab 16, roller guides 18, guide rails 20, a governor 22, safety brakes 24, linkages 26, levers 28, and lift rods 30. Governor 22 includes a governor sheave 32, rope loop 34, and a tensioning sheave 36. Cables 12 connect car frame 14 and a counterweight (not shown in FIG. 1) inside a hoistway. Elevator car 16, which is attached to car frame 14, moves up and down the hoistway by force transmitted through cables or belts 12 to car frame 14 by an elevator drive (not shown) commonly located in a machine room at the top of the hoistway. Roller guides 18 are attached to car frame 14 to guide the elevator car 16 up and down the hoistway along guide rail 20. Governor sheave 32 is mounted at an upper end of the hoistway. Rope loop 34 is wrapped partially around governor sheave 32 and partially around tensioning sheave 36 (located in this embodiment at a bottom end of the hoistway). Rope loop 34 is also connected to elevator car 16 at lever 28, ensuring that the angular velocity of governor sheave 32 is directly related to the speed of elevator car 16.

In the elevator system 10 shown in FIG. 1, governor 22, an electromechanical brake (not shown) located in the machine room, and the safety brake 24 act to stop elevator car 16 if it exceeds a set speed as it travels inside the hoistway. If elevator car 16 reaches an over-speed condition, governor 22 is triggered initially to engage a switch, which in turn cuts power to the elevator drive and drops the brake to arrest movement of the drive sheave (not shown) and thereby arrest movement of elevator car 16. If, however, the elevator car 16 continues to experience an over speed condition, governor 22 may then act to trigger the safety brake 24 to arrest movement of elevator car 16. In addition to engaging a switch to drop the brake, governor 22 also releases a clutching device that grips the governor rope 34. Governor rope 34 is connected to the safety brake 24 through mechanical linkages 26, levers 28, and lift rods 30. As elevator car 16 continues its descent unaffected by the brake, governor rope 34, which is now prevented from moving by actuated governor 22, pulls on operating lever 28. Operating lever 28 "sets" the safety brake 24 by moving linkages 26 connected to lift rods 30, which lift rods 30 cause the safety brake 24 to engage guide rails 20 to bring elevator car 16 to a stop.

Although the elevator system 10 is illustrated and described above as a "roped" system operated with cables 12, it is to be understood that a "ropeless" and/or hydraulic elevator system may benefit from the embodiments described herein.

Mechanical speed governor systems are being replaced in some elevators by electronic systems. Electronic safety actuators may employ asymmetric or symmetric safety brake configurations. These devices typically have one or more sliding wedges forcibly engaging the elevator guide rail 20. Described herein is a speed detection device that comprises one or more rollers engaged with the guide rail to detect a speed of the elevator car 16, relative to the guide rail 20 to ensure that an over-speed condition is not present.

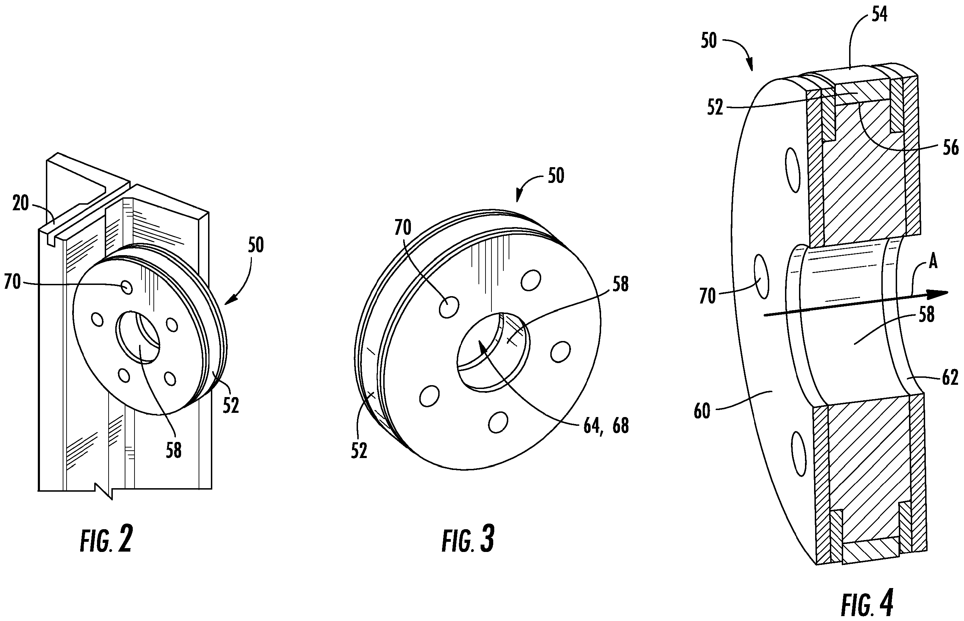

Referring now to FIGS. 2-4, the speed detection device is illustrated in detail and referenced generally with numeral 50. The speed detection device 50 is in the form of a single roller in the description herein and the illustrated embodiments, but it is to be appreciated that more than one roller may be present in an overall speed detection system. The speed detection device 50 includes a cylindrical tire 52 having an outer diameter surface 54 and an inner diameter surface 56, as shown in FIG. 4. In some embodiments, the tire 52 is formed of rubber or a similar material. Located radially inwardly of the tire 52 and in contact with the inner diameter surface 56 is a ring magnet 58. The ring magnet 58 is axially magnetized. The axial magnetization is visually represented with a magnetization in direction A (FIG. 4). It is to be appreciated that one or more arc magnets may be employed in some embodiments.

The ring magnet 58 is retained radially by the inner diameter surface 56 and axially by a first side plate 60 and a second side plate 62. Each side plate 60, 62 is a cylindrical plate, with a central aperture 64 substantially corresponding to a central aperture 68 defined by the ring magnet 58. The apertures 64, 68 provide a mounting location for the speed detection device 50 to the elevator car 16, directly or indirectly. The side plates 60, 62 are formed of metal to facilitate a magnetic flux circuit, as described herein. In some embodiments, the side plates 60, 62 are steel, but it is to be appreciated that other metals may be suitable. Additionally, although a single side plate is illustrated on each axial side of the magnet 58, it is to be understood that a plurality of side plates may be included on each axial side of the magnet 58 in a stacked arrangement.

The tire 52 extends radially outwardly to the outer diameter surface 54 to a radial extent that exceeds the outer diameter of the side plates 60, 62. By orienting the outer diameter surface 54 radially outwardly of the outer surface of the side plates 60, 62 around the entirety of the side plates 60, 62, contact between the tire 52 and the guide rail 20, as shown in FIG. 2, is ensured and metal-to-metal contact between the side plates 60, 62 and the guide rail 20 is avoided.

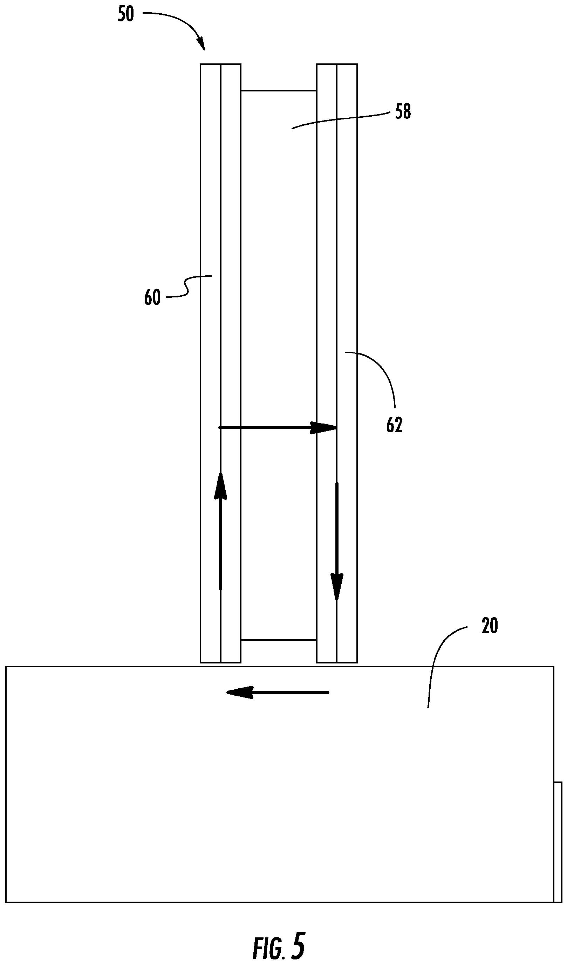

The device 50, and specifically the tire 52, is placed into contact with the guide rail 20 during elevator installation. The magnetization of the ring magnet 58 maintains reliable contact between the tire 52 and the guide rail 20 during operation. As shown in FIG. 5, magnetic flux flows from the magnet 58 to one of the side plate 60 or 62, then to the guide rail 20, then to the other side plate, and back through the magnet 58. The metallic composition of the side plates 60, 62 and the guide rail 20 facilitates closure of a magnetic circuit during contact with the guide rail 20, thereby providing an attractive force between the guide rail 20 and the speed detection device 50.

In some embodiments, the side plates 60, 62 form the "tire" portion that is in contact with the guide rail 20. In such embodiments, the magnet 58 provides the attractive force between the side plates 60, 62 and the guide rail 20. Alternatively, the side plates 60, 62 are magnets, with a thin rubber tire portion surrounding the magnets to provide the attractive force. If the side plates 60, 62 are magnets, they are magnetized radially to compensate for a reduction in normal force.

As shown in FIGS. 2-4, a plurality of speed detection features 70 are positioned within, or disposed on, at least one of the side plates 60, 62. The speed detection features 70 are used to determine the rotational velocity of the speed detection device 50. The speed detection features 70 are areas where differentiations in magnetic flux density are observed. This is accomplished with voids in the side plates 60, 62 or magnetic surfaces protruding through the side plates 60, 62. An external sensor, such as a Hall effect switch, may be utilized to detect pulses associated with the speed detection features 70 to determine the rotational velocity of the speed detection device 50.

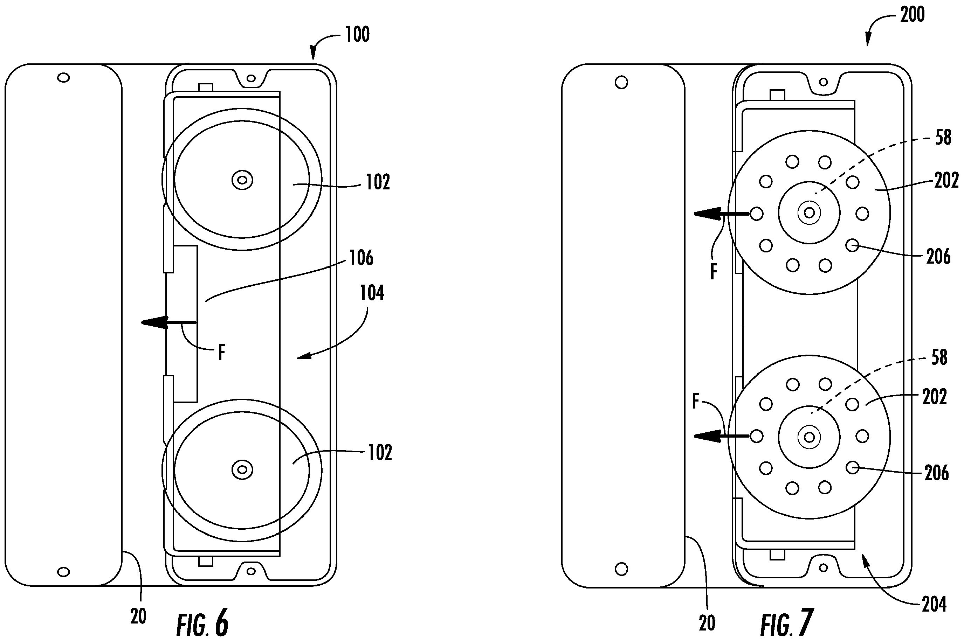

Referring now to FIG. 6, the speed detection device is illustrated according to another aspect of the disclosure and is generally referenced with numeral 100. The speed detection device 100 employs one or more rollers 102 of any configuration to be in contact with the guide rail 20. In the illustrated embodiment, two rollers 102 are depicted, but it is to be appreciated that more or fewer rollers may be employed. The rollers 102 are operatively coupled to a housing 104. The housing 104 is operatively coupled to the elevator car 16. The housing 104 includes two side plates that may be metal or plastic, for example.

Also operatively coupled to the housing 104 is at least one magnet 106. The magnet 106 and the housing 104 are each positioned to be spaced from the guide rail 20 when the roller(s) 102 is in contact with the guide rail 20. However, the magnet 106 is positioned close enough to the guide rail 20 to provide a magnetic attractive force F sufficient to maintain non-slipping contact between the roller(s) 102 and the guide rail 20.

Referring now to FIG. 7, the speed detection device is illustrated according to another aspect of the disclosure and is generally referenced with numeral 200. The speed detection device 200 employs one or more rollers 202 of any configuration to be in contact with the guide rail 20. In the illustrated embodiment, two rollers 202 are depicted, but it is to be appreciated that more or fewer rollers may be employed. The rollers 202 are operatively coupled to a housing 204. The housing 204 is operatively coupled to the elevator car 16. The housing 204 includes two side plates that may be metal or plastic, for example.

Each of the rollers 202 include at least one magnet 206 disposed therein. The magnet 58 ensures that rollers 202 are forced into contact with the guide rail 20. The magnets 206 are used by the Hall effect sensors for detection of rotational speed.

The embodiments described herein avoid disadvantages associated with rollers biased to the guide rail in other manners, such as those with a spring assembly. For example, the embodiments of the speed detection device 50, 100, 200do not rely on springs so they cannot break due to fatigue. Additionally, the magnets maintain a constant force of attraction with the rail regardless of the float of the car. By contrast, the force provided by springs would vary depending upon how much the springs are compressed - which would depend upon the position of the car as it floats on the rail. Furthermore, the housing does not need to be as ruggedly designed because the forces on it are lower. By contrast, if springs were included, one side of the spring would force the roller into contact with the rail, and the other side of the spring would produce a reaction load against the housing. Additionally, wear detection is improved. In one embodiment, as the tire 52 wears over time, the side plates 60, 62 (or 104 or 204), or the magnet 106, will come into contact with the guide rail 20, producing metal-to-metal contact that is easily identifiable. Furthermore, the reliable contact maintained by the magnetization reduces the likelihood of slipping between the tire 52 and the guide rail 20, thereby increasing speed detection accuracy.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments have been described, it is to be understood that aspects of the disclosure may include only some of the described embodiments. Accordingly, the disclosure is not to be seen as limited by the foregoing description, but is only limited by the scope of the appended claims.

## Claims

1. A speed detection device for an elevator system comprising:
a tire operatively coupled to an elevator car, the tire having an outer diameter surface engageable with a guide rail formed of metal; and
a magnet disposed within the tire, the magnet providing a magnetic attractive force with the guide rail to maintain contact between the tire and the guide rail.

2. The speed detection device of claim 1, further comprising:
a first side plate disposed on a first axial side of the magnet; and
a second side plate disposed on a second axial side of the magnet.

3. The speed detection device of claim 2, wherein the first and second side plates are each formed of steel.

4. The speed detection device of claim 2 or 3, wherein the magnet is axially magnetized to direct magnetic flux to one of the first and second side plates.

5. The speed detection device of claim 2 or 3, wherein the magnet is radially magnetized.

6. The speed detection device of any preceding claim, wherein the magnet is a ring magnet.

7. The speed detection device of any preceding claim, wherein the magnet is at least one arc magnet.

8. The speed detection device of any preceding claim, further comprising a plurality of speed detection features to determine a rotational velocity of the tire.

9. The speed detection device of claim 8, wherein the speed detection features comprise magnet portions protruding into apertures defined by at least one of the first and second side plates; and/or
wherein the speed detection features comprise apertures defined by at least one of the first and second side plates.

10. The speed detection device of any preceding claim, wherein the tire comprises rubber.

11. The speed detection device of any preceding claim, wherein the tire includes an inner diameter surface, a magnet outer diameter located proximate the inner diameter surface.

12. A speed detection device for an elevator system comprising:
a housing operatively coupled to an elevator car;
at least one roller operatively coupled to the housing and engageable with a guide rail formed of metal; and
a magnet providing a magnetic attractive force with the guide rail to maintain contact between the roller(s) and the guide rail.

13. The speed detection device of claim 12, wherein the magnet is operatively coupled to the housing.

14. The speed detection device of claim 12 or 13, wherein the magnet is one of a plurality of magnets, at least one magnet of the plurality of magnets disposed within each of the roller(s); and preferably
wherein each of the roller(s) include a plurality of magnets disposed therein.

15. A speed detection device comprising:
a roller in contact with a metallic member;
a speed sensing element detecting a rotational velocity of the roller during movement along the metallic member; and
a magnet providing a magnetic attractive force with the metallic member to maintain contact between the roller and the metallic member.
